# EUROPEAN PATENT APPLICATION

(11) **EP 1 501 223 A1**
(43) Date of publication of application: **26.01.2005**
(21) Application number: 04024951.8
(22) Date of filing: 09.05.2001
(51) Int. Cl.: H04J 13/04, H04B 1/707

(54) **Interference canceller apparatus and interference elimination method**

(30) Priority: 11.05.2000 JP 2000138715
(62) Divisional of application: 01929992.4
(71) Applicant: MATSUSHITA ELECTRIC INDUSTRIAL CO., LTD., Kadoma-shi, Osaka 571-8501 (JP)
(72) Inventor: Miyoshi, Kenichi, Yokohama-shi Kanagawa 232-0066 (JP); Kato, Osamu, Yokosuka-shi Kanagawa 237-0066 (JP)
(74) Representative: Grünecker, Kinkeldey, Stockmair & Schwanhäusser Anwaltssozietät

(57) **Abstract**

An interference canceller capable of reducing interference between users by generating appropriate replicas. This canceller carries out a hard decision on a signal after FEC decoding and carries out error detection on the resulting signal, and, when an error is detected, generates a replica with a smaller weighting factor assigned to an erroneous signal or generates a replica using a provisionally detected value prior to FEC decoding (hard decision value or soft decision value). Or when the error detection result in the previous stage is OK, the canceller generates a replica using the hard decision value in the previous stage.

## Description

### Technical Field

The present invention relates to a multi-user type interference canceller apparatus and interference elimination method in a CDMA (Code Division Multiple Access) mobile unit communication system.

### Background Art

A multi-user type interference canceller apparatus carries out interference elimination processing based on spreading codes of mobile station apparatuses of all communicating users (hereinafter also simply referred to as "users" ) and reception timing information. For this interference canceller apparatus, a method of generating a replica using a signal after performing FEC (Forward Error Correction) decoding as an error correcting decoding, is proposed.

When a replica is generated, this method follows the procedure of provisionally detecting the signal after FEC decoding, carrying out FEC coding using the provisionally detected signal, and generating the replica.

However, when the provisionally detected value after FEC decoding is incorrect, such a conventional apparatus has a problem that a replica after FEC coding is not generated correctly and generation of an incorrect replica will increase interference between users. Especially, when a convolutional code is used as an FEC code, coding a signal with a provisionally detected value which contains a 1-bit error will result in many errors in the signal after a plurality of coding processes.

### Disclosure of the Invention

It is an object of the present invention to provide an interference canceller apparatus and interference elimination method capable of generating an appropriate replica and reducing interference between users.

According to an aspect of the invention, an interference canceller apparatus, which is an apparatus that eliminates interference from an other user by generating an interference replica of the other user and subtracting the interference replica from a received signal, comprises hard deciding means for carrying out a hard decision on a signal after performing error correcting decoding on the received signal, error detecting means for carrying out error detection on a signal after the hard decision, and replica generating means for generating, when the error detection result shows that the signal after the hard decision is erroneous, the replica us ing a weighting factor to reduce the replica.

According to another aspect of the invention, which is an apparatus that eliminates interference from an other user by generating an interference replica of the other user and subtracting the interference replica from a received signal, comprises first hard deciding means for carrying out a hard decision on a signal after performing error correcting decoding on the received signal, second hard deciding means for carrying out a hard decision on a signal before performing error correcting decoding on the received signal, error detecting means for carrying out error detection on a signal after the first hard decision, and replica generating means for generating, when the error detection result shows that the signal after the first hard decision is erroneous, the replica using a signal after the second hard decision.

According to still another aspect of the invention, an interference canceller apparatus, which is an apparatus that eliminates interference from an other user by generating an interference replica of the other user and subtracting the interference replica from a received signal, comprises hard deciding means for carrying out a hard decision on a signal after performing error correcting decoding on the received signal, soft deciding means for carrying out a soft decision on a signal before performing error correcting decoding on the received signal, error detecting means for carrying out error detection on a signal after the hard decision, and replica generating means for generating, when the error detection result shows that the signal after the hard decision is erroneous, the replica using a signal after the soft decision.

According to a further aspect of the invention, an interference canceller apparatus, which is an interference canceller apparatus provided with a plurality of stages each for generating an interference replica of an other user and subtracting the interference replica from a received signal, with at least one stage except the final stage having an interference canceller unit, the interference canceller unit comprising first hard deciding means for carrying out a hard decision on a signal after performing error correcting decoding on the received signal, second hard deciding means for carrying out a hard decision on a signal before performing error correcting decoding on the received signal, error detecting means for carrying out error detection on a signal after the first hard decision, selecting means for selecting a most suitable signal to be used for replica generation from among a signal obtained by carrying out error correcting coding on the signal after the first hard decision in the own stage, a signal obtained by carrying out error correcting coding on the signal after the first hard decision in the previous stage, and a signal after the second hard decision in the own stage, based on the error detection result of the own stage and the error detection result of the previous stage, and replica generating means for generating the replica using the selected signal.

According to a still further aspect of the invention, an interference canceller apparatus, which is an interference canceller apparatus provided with a plurality of stages each for generating an interference replica of an other user and subtracting the interference replica from a received signal, with at least one stage except the final stage having an interference canceller unit, the interference canceller unit comprising hard deciding means for carrying out a hard decision on a signal after performing error correcting decoding on the received signal, soft deciding means for carrying out a soft decision on a signal before performing error correcting decoding on the received signal, error detecting means for carrying out error detection on a signal after the hard decision, selecting means for selecting a most suitable signal to be used for replica generation from among a signal obtained by carrying out error correcting coding on the signal after the hard decision in the own stage, a signal obtained by carrying out error correcting coding on the signal after the hard decision in the previous stage, and a signal after the soft decision in the own stage, based on the error detection result of the own stage and the error detection result of the previous stage, and replica generating means for generating the replica using the selected signal.

According to a yet further aspect of the invention, an interference elimination method, which is a method for eliminating interference from an other user by generating an interference replica of the other user and subtracting the interference replica from a received signal, comprises a hard deciding step of carrying out a hard decision on a signal after performing error correcting decoding on the received signal, an error detecting step of carrying out error detection on a signal after the hard decision, and a replica generating step of generating, when the error detection result shows that the signal after the hard decision is erroneous, the replica using a weighting factor to reduce the replica.

According to a yet further aspect of the invention, an interference elimination method, which is a method for eliminating interference from an other user by generating an interference replica of the other user and subtracting the interference replica from a received signal, comprises a first hard deciding step of carrying out a hard decision on a signal after performing error correcting decoding on the received signal, an error detecting step of carrying out error detection on a signal after the first hard decision, and a replica generating step of generating, when the error detection result shows that the signal after the first hard dec is ion is erroneous, the replica using a signal obtained by carrying out a hard decision on a signal before performing error correcting decoding on the received signal.

According to a yet further aspect of the invention, an interference elimination method, which a method for eliminating interference from an other user by generating an interference replica of the other user and subtracting the interference replica from a received signal, comprises a hard deciding step of carrying out a hard decision on a signal after performing error correcting decoding on the received signal, an error detecting step of carrying out error detection on a signal after the hard decision, and a replica generating step of generating, when the error detection result shows that the signal after the hard decision is erroneous, the replica using a signal obtained by carrying out a soft decision on a signal before performing error correcting decoding on the received signal.

According to a yet further aspect of the invention, an interference elimination method, which is an interference elimination method for an interference canceller apparatus provided with a plurality of stages each for generating an interference replica of an other user and subtracting the interference replica from a received signal, whose at least one stage except the final stage comprises a first hard deciding step of carrying out a hard decision on a signal after performing error correcting decoding on the received signal, a second hard deciding step of carrying out a hard decision on a signal before performing error correcting decoding on the received signal, an error detecting step of carrying out error detection on a signal after the first hard decision, a selecting step of selecting a most suitable signal to be used for replica generation from among a signal obtained by carrying out error correcting coding on the signal after the first hard decision in the own stage, a signal obtained by carrying out error correcting coding on the signal after the first hard decision in the previous stage, and a signal after the second hard decision in the own stage, based on the error detection result of the own stage and the error detection result of the previous stage, and a replica generating step of generating the replica using the selected signal.

According to a yet further aspect of the invention, an interference elimination method, which is an interference elimination method for an interference canceller apparatus provided with a plurality of stages each for generating an interference replica of an other user and subtracting the interference replica from a received signal, whose at least one stage except the final stage comprises a hard deciding step of carrying out a hard decision on a signal after performing error correcting decoding on the received signal, a soft deciding step of carrying out a soft decision on a signal before performing error correcting decoding on the received signal, an error detecting step of carrying out error detection on a signal after the hard decision, a selecting step of selecting a most suitable signal to be used for replica generation from among a signal obtained by carrying out error correcting coding on the signal after the hard decision in the own stage, a signal obtained by carrying out error correcting coding on the signal after the hard decision in the previous stage, and a signal after the soft decision in the own stage, based on the error detection result of the own stage and the error detection result of the previous stage, and a replica generating step of generating the replica using the selected signal.

### Brief Description of the Drawings

FIG.1 is a block diagram showing a configuration of an interference canceller apparatus according to Embodiment 1 of the present invention;
FIG.2 is a block diagram showing a configuration of an ICU section in a first stage and a second stage in the interference canceller apparatus according to Embodiment 1;
FIG.3 is a block diagram showing a configuration of an ICU section in a third stage in the interference canceller apparatus according to Embodiment 1;
FIG.4 is a block diagram showing a configuration of an interference canceller apparatus according to Embodiment 2 of the present invention;
FIG.5 is a block diagram showing a configuration of an ICU section in a first stage in the interference canceller apparatus according to Embodiment 2;
FIG.6 is a block diagram showing a configuration of an ICU section in a second stage and a third stage in the interference canceller apparatus according to Embodiment 2;
FIG.7 is a block diagram showing a configuration of an ICU section in a fourth stage in the interference canceller apparatus according to Embodiment 2;
FIG.8 is a block diagram showing a configuration of an ICU section in a first stage in an interference canceller apparatus according to Embodiment 3 of the present invention; and
FIG.9 is a block diagram showing a configuration of an ICU section in and after a second stage (except the final stage) in the interference canceller apparatus according to Embodiment 3.

### Best Mode for Carrying out the Invention

Referring to the attached drawings, embodiments of the present invention will be explained in detail below.

### (Embodiment 1)

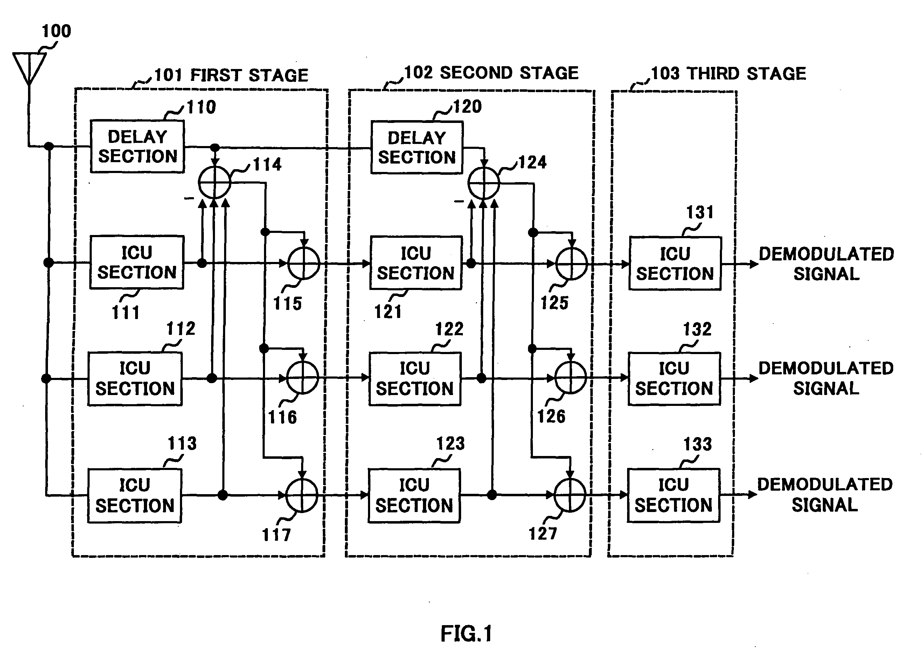

FIG.1 is a block diagram showing a configuration of an interference canceller apparatus according to Embodiment 1 of the present invention.

The interference canceller apparatus shown in FIG. 1 is a multi-stage type interference canceller and consists of antenna 100 followed by three stages, namely, first stage 101, second stage 102, and third stage 103. In each stage (first stage 101 and second stage 102) except the final stage (third stage 103), when a received signal is input to an interference canceller unit (hereinafter referred to as "ICU section") corresponding to the user, the ICU section generates a replica of an interference signal for each user signal, subtracts the generated replica from the received signal and thereby removes interference. At this time, in and after the second stage (second stage 102), a replica is generated by the ICU section from a signal from which a replica generated in the stage immediately preceding the stage for any user other than the own user has been removed. By following such a procedure, the interference canceller apparatus improves the precision of replicas stage-by-stage and eliminates interference.

More specifically, first stage 101 is provided with delay section 110 that delays the received signal of antenna 100, a plurality of (here three) ICU sections 111-113 that generate replicas for their respective user signals received by antenna 100, subtraction section 114 that subtracts the replicas outputted from ICU sections 111-113 from the received signal that is delayed by delay section 110, and addition sections 115-117 that add up the subtraction results from subtraction section 114 and the replicas outputted from corresponding ICU sections 111-113.

Second stage 102 is provided with delay section 120 that delays the received signal delayed by delay section 110, ICU sections 121-123 that generate replicas for their respective user signals outputted from addition sections 115-117, subtraction section 124 that subtracts the replicas outputted from ICU sections 121-123 from the received signal delayed by delay section 120, and addition sections 125-127 that add up the subtraction results from subtraction section 124 and the replicas outputted from corresponding ICU sections 121-123.

Third stage 103 is provided with ICU sections 131 -133 that generate demodulated signals for the respective user signals outputted from addition sections 125-127 in second stage 102.

However, this embodiment assumes, as shown in FIG.1, that the number of stages of the interference canceller apparatus is three and the number of users (the number of ICU sections in each stage) is three, but this embodiment is, of course, not limited to this assumption.

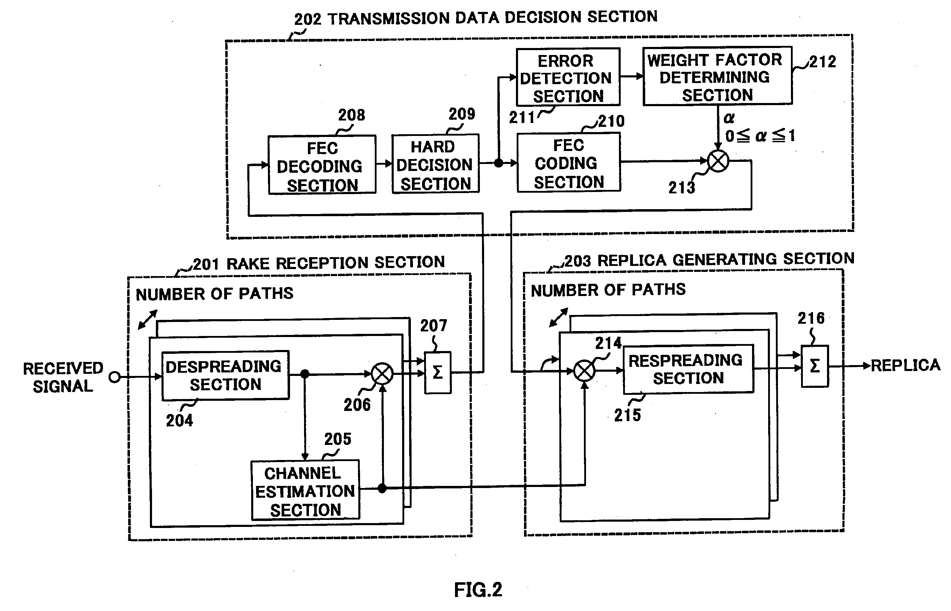

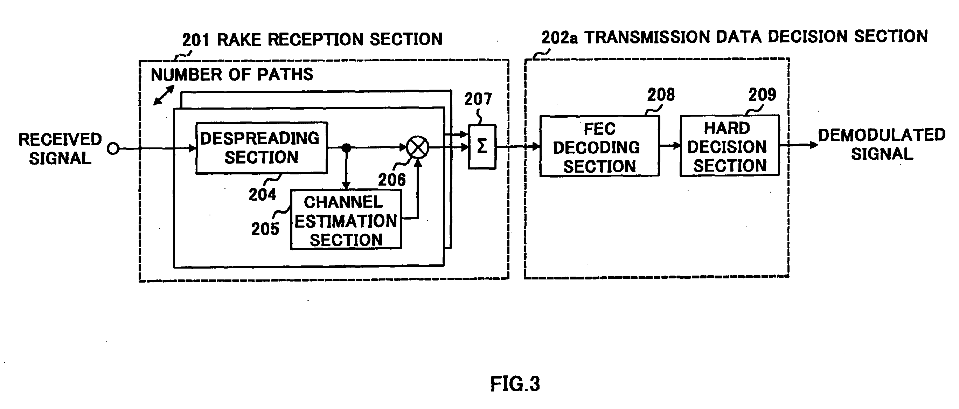

Next, configurations of ICU sections 111-113, 121-123, and 131-133 in stages 101-103 will be explained using FIG.2 and FIG.3

First, ICU sections 111-113 and 121123 in both first and second stages 101 and 102 are each provided with RAKE reception section 201, transmission data decision section 202, and replica generating section 203 as shown in FIG.2.

RAKE reception section 201 is provided with despreading section 204, channel estimation section 205, and multiplication section 206 for each path of a plurality of signal transmission paths, and is provided with addition section 207 that adds up all signals outputted from multiplication sections 206 of all paths.

Transmission data decision section 202 is provided with FEC decoding section 208, hard decision section 209, FEC coding section 210, error detection section 211, weighting factor determining section 212, and multiplication section 213.

Replica generating section 203 is provided with multiplication section 214 and respreading section 215 for each path described above, and is provided with addition section 216 that adds up all signals outputted from respreading sections 215 of all paths.

Then, ICU sections 131-133 in third stage 103 which is the final stage are each provided, as shown in FIG.3, with RAKE reception section 201 described above and transmission data decision section 202a which is, in contrast to transmission data decision section 202 described above, provided with only FEC decoding section 208 and hard decision section 209. That is, ICU sections 131-133 in third stage 103 are different from ICU sections 111-113 and 121-123 in first and second stages 101 and 102 in that ICU sections 131-133 in third stage 103 have no replica generating section 203 and transmission data decision section 202a has only FEC decoding section 208 and hard decision section 209. This is because components required for generation of replica become unnecessary since a demodulated signal instead of replica is outputted by third stage 103.Next, an operation of the interference canceller apparatus given in the above configuration, and especially operations of ICU sections 111-113, 121-123, and 131-133 in respective stages 101 -103 will be explained using FIG.2 and FIG.3.

First, operations of ICU sections 111-113 and 121-123 in first and second stages 101 and 102 will be explained using FIG.2.

First, RAKE reception section 201 performs RAKE reception on the own user signal.

That is, the own user signal is despread by despreading section 204 for every path and this despread signal is outputted to channel estimation section 205 and multiplication section 206.

Channel estimation section 205 estimates from the despread signal the phase and amplitude vectors of the signal that has rotated due to fading, and the channel estimated value obtained in this way is outputted to multiplication section 206.

Multiplication section 206 multiplies the despread signal by channel estimated value. The multiplication results of the respective paths obtained in this way are all added up by addition section 207. This addition result of RAKE reception is outputted to FEC decoding section 208 in transmission data decision section 202.

FEC decoding section 208 performs FEC decoding from the result of RAKE reception. This FEC decoding section 208 decodes the signal coded by the transmitting side and uses, for example, Viterbi decoding.

The signal after FEC decoding is subjected to a hard decision by hard decision section 209 and outputted to FEC coding section 210 and error detection section 211. FEC coding section 210 performs FEC coding on the hard decision signal. This FEC coding is a coding carried out as being carried out on the transmitting side and, for instance, uses a convolutional code or turbo code.

Furthermore, the hard decision signal is subjected to error detection by error detection section 211. This error detection is intended to detect whether an error along the transmission path has occurred or not in a signal corresponding to a certain segment, for example, a one-frame segment, and is carried out using, for example, a CRC (Cyclic Redundancy Check), etc.

The error detection result is input to weighting factor determining section 212 and the value of a weighting factor (hereinafter referred to as "weight factor") α (0 ≦ α ≦ 1) is determined according to this error detection result. Here, if an error is detected, the value of weight factor α is set to a small value (e.g., a value close to 0) and if no error is detected, the value of weight factor α is set to 1.

Determined weight factor α is multiplied by the FEC coding signal by multiplication section 213. The obtained multiplication result is outputted to multiplication sections 214 of the respective paths in replica generating section 203.

Multiplication sections 214 of the respective paths multiply the multiplication result from transmission data decision section 202 by the channel estimated value of the corresponding path from RAKE reception section 201. This multiplication result is subjected to spreading processing similar to that on the transmitting side by respreading section 215.

The spread signals of the respective paths obtained in this way are added up by addition section 216. The replicas resulting from this addition are outputted from replica generating section 203 as the outputs of ICU sections 111-113, 121-123, and 131-133.

Next, operations of ICU sections 131-133 in third stage 103 will be explained using FIG.3. Explanations common to those of first and second stages 101 and 102 will be omitted.

The output of RAKE reception section 201 which is the result of RAKE reception is outputted to FEC decoding section 208 in transmission data decision section 202a.

FEC decoding section 208 performs FEC decoding (e.g., Viterbi decoding) from the result of RAKE reception. The signal after this FEC decoding is subjected to a hard decision by hard decision section 209 and outputted from transmission data decision section 202a as the outputs of respective ICU sections 131-133. That is, the hard decision signal outputted from hard decision section 209 is outputted from respective ICU sections 131-133 as demodulated signals.

Thus, the interference canceller apparatus according to this embodiment performs error detection on the signal obtained by carrying out a hard decision on a signal after FEC decoding and generates a replica using a weight factor according to the error detection result. For example, for a signal detected to erroneous, this interference canceller apparatus assigns a smaller weight factor and generates a replica and in this way eliminates influences of signals containing errors and can thereby generate an appropriate replica capable of suppressing an increase of interference (deterioration of performance) by generation of erroneous replicas and reduce interference between users.

### (Embodiment 2)

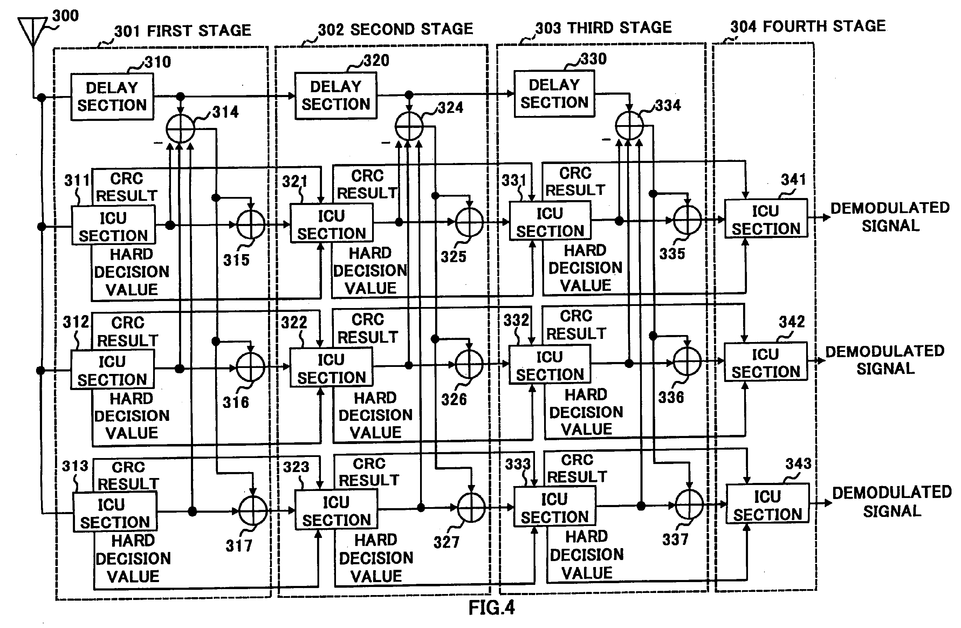

FIG.4 is a block diagram showing a configuration of an interference canceller apparatus according to Embodiment 2 of the present invention.

As in the case of the interference canceller apparatus according to Embodiment 1 shown in FIG.1, the interference canceller apparatus shown in FIG.4 is a multi-stage type interference canceller apparatus and is provided with four cascaded stages following antenna 300, namely, first stage 301, second stage 302, third stage 303, and fourth stage 304. Embodiment 2 is different from Embodiment 1 in that a CRC result and a hard decision value after FEC coding (hereinafter simply referred to as "hard decision value") are both outputted from the ICU sections in the respective stages (except the final stage) and inputted to the corresponding ICU sections in the next stage. Thus, when a CRC result is OK (that is, no error) at a certain ICU section, a replica can be generated using a hard decision value corresponding to a specific time at which no error was detected in the corresponding ICU sections in subsequent stages.

Specifically, first stage 301 is provided with delay section 310 that delays the received signal of antenna 300, a plurality of (here three) ICU sections 311-313 that generate replicas for the respective user signals received by antenna 300 and output a CRC result and hard decision value, subtraction section 314 that subtracts the replicas output from ICU sections 311-313 from the received signal that is delayed by delay section 310, and addition sections 315-317 that add up the subtraction results from subtraction section 314 and the replicas outputted from corresponding ICU sections 311-313.

Second stage 302 is provided with delay section 320 that delays the received signal delayed by delay section 310, ICU sections 321-323 that generate replicas according to the respective user signals outputted from addition sections 315-317 and CRC result and hard decision value from first stage 301, and that output the CRC result and hard decision value, subtraction section 324 that subtracts the replicas outputted from ICU sections 321-323 from the received signal that is delayed by delay section 320, and addition sections 325-327 that add up the subtraction results from subtraction section 324 and the replicas outputted from corresponding ICU sections 321323.

Furthermore, third stage 303 also has a configuration similar to that of second stage 302. That is, third stage 303 is provided with delay section 330 that delays the received signal delayed by delay section 320, ICU sections 331-333 that generate replicas according to the user signals outputted from addition sections 325-327 in second stage 302 and a CRC result and hard decision value from second stage 302, and that output the CRC result and hard decision value, subtraction section 334 that subtracts the replicas outputted from ICU sections 331-333 from the received signal that is delayed by delay section 330, and addition sections 335-337 that add up the subtraction results from -subtraction section 334 and the replicas outputted from corresponding ICU sections 331-333.

Fourth stage 304 is provided with ICU sections 341 -343 that generate demodulated signals for the respective user signals according to the respective user signals outputted from addition sections 335-337 in third stage 303 and the CRC result and hard decision value from third stage 303.

Although this embodiment assumes, as shown in Fig. 4, that the number of stages of the interference canceller apparatus is four and the number of users (the number of ICU sections in each stage) is three, this embodiment is, of course, not limited to this assumption.

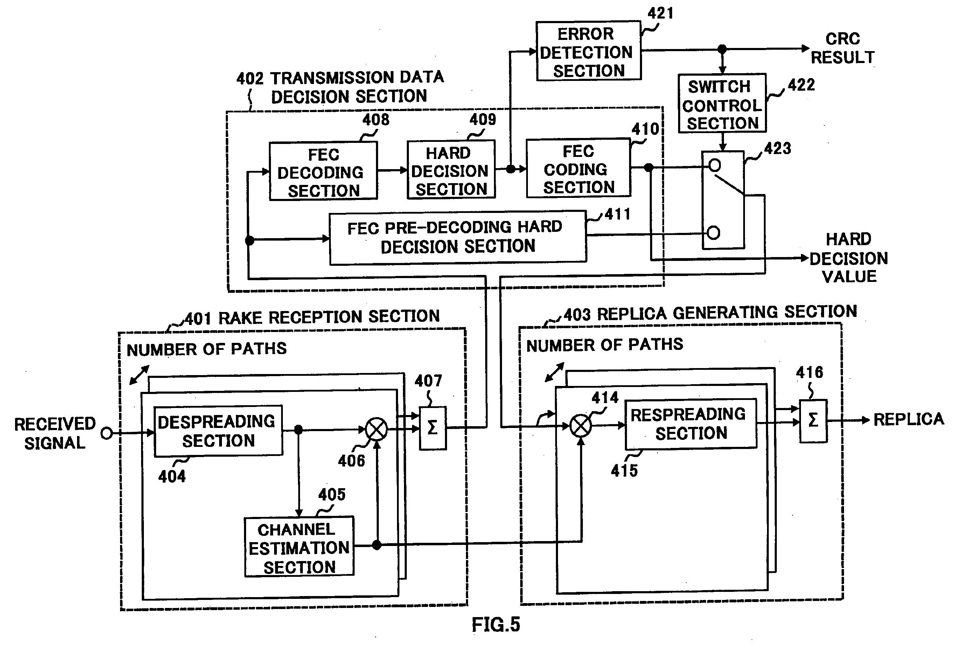

Hereinafter, configurations of ICU sections 311-313, 321-323, 331-333, and 341-343 in stages 301304 will be explained using FIG.5 to FIG.7.

First, as shown in FIG.5, ICU sections 311313 in first stage 301 are each provided with RAKE reception section 401, transmission data decision section 402, and replica generating section 403, and, furthermore, error detection section 421, switch control section 422, and switch section 423.

RAKE reception section 401 is provided with despreading section 404, channel estimation section 405, multiplication section 406 for each of a plurality of signal transmission paths, and is provided with addition section 407 that adds up all signals outputted from multiplication sections 406 of all paths.

Transmission data decision section 402 is provided with FEC decoding section 408, hard decision section 409, FEC coding section 410, and FEC pre-decoding hard decision section 411.

Replica generating section 403 is provided with multiplication section 414 and respreading section 415 for each path described above, and is provided with addition section 416 that adds up all signals output from respreading sections 415 of all paths.

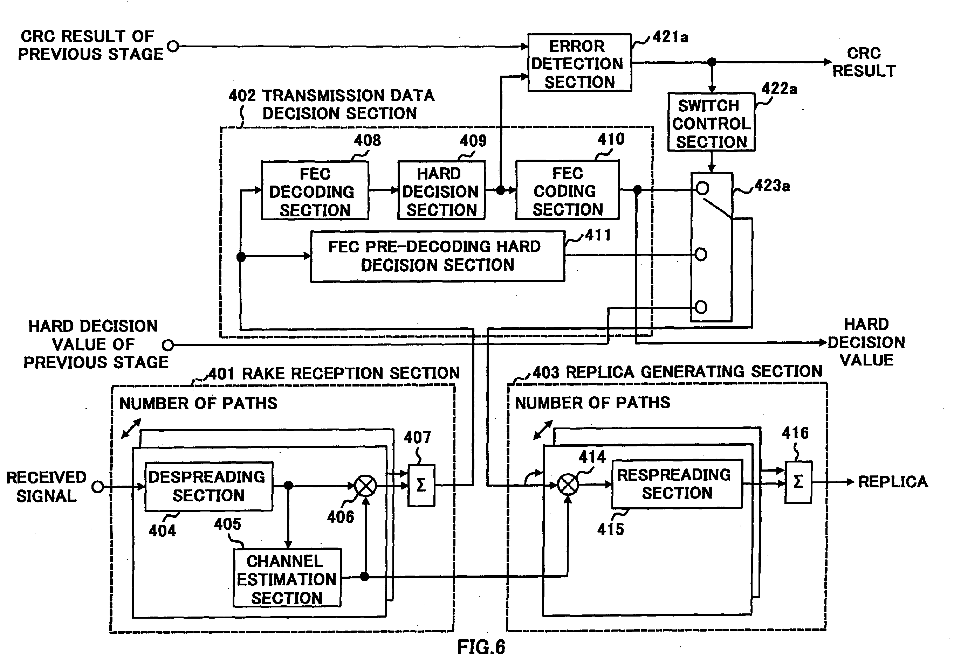

Then, ICU sections 321-323 in second stage 302 and ICU sections 331-333 in third stage 303 are each provided, as shown in FIG. 6, with the above mentioned RAKE reception section 401, transmission data decision section 402, and replica generating section 403, and, furthermore, error detection section 421a, switch control section 422a, and switch section 423a.

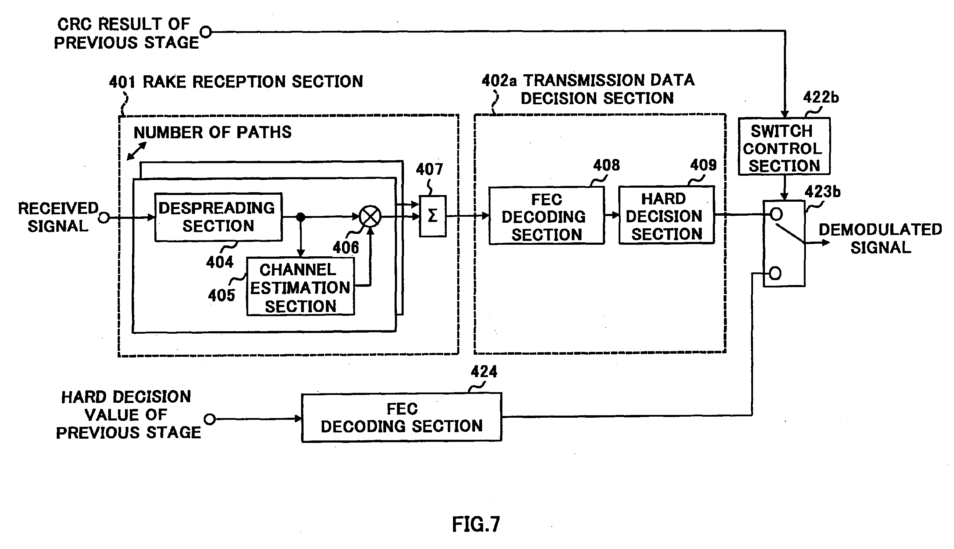

Next, ICU sections 341-343 in fourth stage 304 are each provided with, in addition to the above mentioned RAKE reception section 401, transmission data decision section 402a that is, in contrast to above transmission data decision section 402, only provided with FEC decoding section 408 and hard decision section 409, switch control section 422b, switch section 423b, and FEC decoding section 424, as shown in Fig.7.

Then, an operation of the interference canceller apparatus in the above configuration, and especially operations of ICU sections 311-313, 321-323, 331 -333, and 341-343 in respective stages 301-304 will be explained using FIG.5 and FIG.7.

Toward this end, operations of ICU 311-313 in first stage 301 will be explained using FIG.5.

First, RAKE reception section 401 performs RAKE reception on the own user signal.

That is, for every path, the own user signal is despread by despreading section 404and this despread signal is outputted to channel estimation section 405 and multiplication section 406.

Channel estimation section 405 estimates from the despread signal the phase and amplitude vectors of the signal that has rotated due to fading and the channel estimated value obtained in this way is outputted to multiplication section 406.

Multiplication section 406 multiplies the despread signal by the channel estimated value. The multiplication results of the respective paths obtained in this way are all added up by addition section 407. This addition result of RAKE reception is outputted to FEC decoding section 408 and FEC pre-decoding hard decision section 411 in transmission data decision section 402.

FEC pre-decoding hard decision section 411 carries out a direct hard decision from the result of RAKE reception and outputs the resulting hard decision signal (hard decision value) prior to FEC decoding to switch section 423.

On the other hand, FEC decoding section 408 carries out FEC decoding from the result of RAKE reception. The signal after this FEC decoding is subjected to a hard decision by hard decision section 409 and then outputted to FEC coding section 410 and error detection section 421.

FEC coding section 410 carries out FEC coding on the hard decision signal and this FEC-coded hard decision value is outputted to switch section 423 and to corresponding ICU sections 321-323 in second stage 302.

Furthermore, error detection section 421 carries out error detection on the hard decision signal from hard decision section 409. For example, if an error is detected by a CRC, this CRC result is then outputted to switch control section 422 and to corresponding ICU sections 321-323 in second stage 302.

Here, switch control section 422 selects a signal to be outputted to replica generating section 403 according to the following conditions:

First, when the CRC result from error detection section 421 is NG (an error is detected), switch control section 422 switches switch 423 to the FEC pre-decoding hard decision section 411 side so that the hard decision value prior to FEC decoding is outputted to multiplication section 414 of each path in replica generating section 403.

In this case, multiplication section 414 of each path multiplies the hard decision value prior to FEC decoding by the channel estimated value of the corresponding path from RAKE reception section 401, and this result is subjected to spreading process in the same way as on the transmitting side by respreading section 415.

The spread signals of the respective paths obtained in this way are added up by addition section 416. The replicas resulting from this addition are outputted from replica generating section 403 as the outputs of ICU sections 311-313 and sent to second stage 302 via addition sections 315-317.

Second, when the CRC result from error detection section 421 is OK (no error), switch control section 422 switches switch 423 to the FEC coding section 410 side so that the hard decision signal (hard decision value) after FEC coding is outputted to multiplication section 414 of each path in replica generating section 403.

In this case, multiplication section 414 of each path multiplies the hard decision value after FEC coding by the channel estimated value of the corresponding path from RAKE reception section 401, and this result is subjected to spreading process by respreading section 415. The spread signals of the respective paths obtained in this way are added up by addition section 416. The replicas resulting from this addition are outputted from replica generating section 403 as the outputs of ICU sections 311-313 and sent to second stage 302 via addition sections 315-317.

Next, operations of ICU sections 321-323 in second stage 302 will be explained using FIG.6. Explanations common to those of first stage 301 will be omitted.

Processing in RAKE reception section 401 and transmission data decision section 402 is the same as that in first stage 301, and therefore explanations thereof are omitted.

Here, the CRC result from the previous stage (first stage 301) in addition to the hard decision signal from hard decision section 409 in the own stage (second stage 302) are inputted to error detection section 421a, and the hard decision value from the previous stage in addition to the hard decision value prior to FEC decoding and the hard decision value after FEC coding in the own stage are inputted to switch section 423a. Furthermore, the error detection result (CRC result) of the own stage obtained from error detection section 421a and the hard decision value from FEC coding section 410 are outputted to corresponding ICU sections 331-333 in the next stage (third stage 303).

In this case, switch control section 422a selects the signal to be outputted to replica generating section 403 according to the following conditions:

First, when error detection section 421a detects that the CRC result from the previous stage is OK (no error), switch control section 422a switches switch section 423a to the position where the hard decision value of the previous stage is selected, so that the hard decision value of the relevant stage is outputted to replica generating section 403.

In this case, since an errorless signal is used to generate a replica, it is possible to generate a replica with high precision reliably. Moreover, since a series of processes such as FEC decoding, hard decision, and FEC coding is unnecessary in the own stage, it is possible to reduce the amount of calculations.

Second, when error detection section 421a detects that the CRC result from the previous stage is NG (an error is detected) and the CRC result of the hard decision signal from hard decision section 409 in the own stage is OK, switch control section 422a switches switch section 423a to the position where the hard decision value from the FEC coding section 410 is selected, so that the hard decision value from relevant FEC coding section 410 is outputted to replica generating section 403.

Since an errorless signal is used to generate a replica, it is possible, also in this case, to generate a replica with high precision reliably.

Third, when error detection section 421a detects that the CRC result from the previous stage is NG and the CRC result of the hard decision signal from hard decision section 409 in the own stage is also NG, switch control section 422a switches switch section 423a to the position where the hard decision value from FEC pre-decoding hard decision section 411 is selected, so that the hard decision value from relevant FEC pre-decoding hard decision section 411 is outputted to replica generating section 403.

In this case, since replica generating section 403 will no longer generate any wrong replica using an erroneous signal, it is possible to improve the precision of replicas.

By the way, the same processing as that in the above-described second stage is performed in third stage 303, and therefore explanations thereof are omitted. However, here, the CRC result from the previous stage (second stage 302) in addition to the hard decision signal from hard decision section 409 in the own stage (third stage 303) are inputted to error detection section 421a, and the hard decision value from the previous stage in addition to the hard decision value prior to FEC decoding and hard decision value after FEC coding in the own stage are inputted to switch section 423a. Furthermore, the error detection result (CRC result) from error detection section 421a in the own stage and the hard decision value from FEC coding section 410 are outputted to corresponding ICU sections 341-343 in the next stage (fourth stage 304).

Next, operations of ICU sections 341-343 in fourth stage 304 will be explained using FIG.7. Explanations common to first stage 301 will be omitted.

The processing in RAKE reception section 401 is the same as that in first stage 301, and therefore explanations thereof are omitted.

The output of RAKE reception section 401 resulting from RAKE reception is outputted to FEC decoding section 408 in transmission data decision section 402a.

FEC decoding section 408 carries out FEC decoding from the result of RAKE reception. The signal after FEC decoding is subjected to a hard decision by hard decision section 409 and then outputted to switch section 423b.

In addition, switch section 423b also receives a signal obtained by decoding the hard decision value from the previous stage (third stage 303) by FEC decoding section 424.

On the other hand, the CRC result from the previous stage is inputted to switch control section 422b.

Here, switch control section 422b selects a signal to be outputted from ICU sections 341-343 as demodulated signals according to the following conditions:

First, when the CRC result from the previous stage is OK (no error), switch control section 422b switches switch section 423b to the position where the signal obtained by FEC-decoding the hard decision value of the previous stage by FEC decoding section 424 is selected, so that the signal obtained by FEC-decoding the hard decision value of the previous stage is outputted as the demodulated signal.

In this case, since an errorless signal is outputted as the demodulated signal, it is possible to output a demodulated signal with high precision reliably. Furthermore, since RAKE reception processing and transmission data decision processing are unnecessary in the own stage (fourth stage 304), it is possible to reduce the amount of calculations.

Second, when the CRC result from the previous stage is NG (an error is detected) , switch control section 422b switches switch section 423b to the position where the hard decision signal from hard decision section 409 in the own stage is selected, so that the hard decision signal from hard decision section 409 in the own stage is outputted as the demodulated signal.

In this case, since erroneous signals will no longer be outputted as demodulated signals, it is possible to improve precision of the demodulated signals to be outputted.

Thus, the interference canceller apparatus according to this embodiment carries out error detection (CRC) on the signal obtained by carrying out a hard decision on the signal after FEC decoding in stages except the final stage, outputs the CRC result and hard decision value (FEC-coded hard decision signal) in the own stage to the next stage, and when the CRC result from the previous stage is OK (no error), generates a replica using the errorless hard decision value in the previous stage, and can thereby generate a replica with high precision reliably. Moreover, since a series of processes such as FEC decoding, hard decision, and FEC coding in the own stage become unnecessary, it is possible to reduce the amount of calculations.

Furthermore, when the CRC result from the previous stage is NG (an error is detected) and the CRC result in the own stage is OK, the interference canceller apparatus according to this embodiment generates a replica using the errorless hard decision value in the own stage, and can thereby generate a replica with high precision reliably.

Furthermore, when the CRC result from the previous stage is NG and the CRC result in the own stage is also NG, the interference canceller apparatus according to this embodiment does not use the erroneous signal, but generates a replica using the signal obtained by carrying out a hard decision on the signal prior to FEC decoding in the own stage, and can thereby prevent replicas from being generated using erroneous signals and improve precision of replicas.

Thus, such processing makes it possible to generate appropriate replicas and reduce interference between users.

### (Embodiment 3)

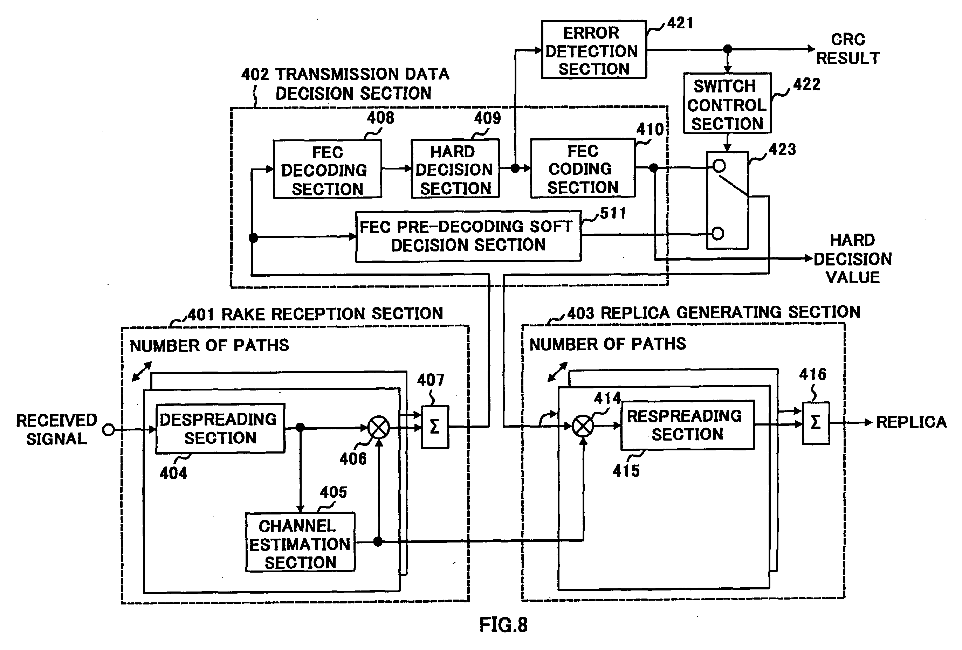

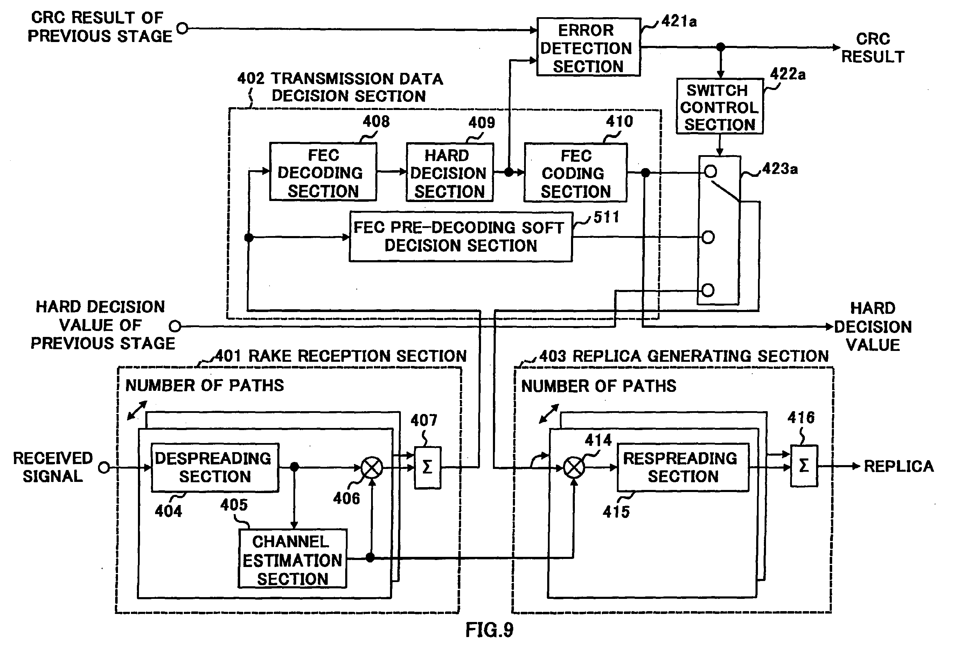

FIG.8 is a block diagram showing a configuration of an ICU section in a first stage of an interference canceller apparatus according to Embodiment 3 of the present invention and FIG.9 is a block diagram showing a configuration of an ICU section in and after a second stage (except the final stage) of the interference canceller apparatus according to the same embodiment. Here, the same components as those of the interference canceller apparatus corresponding to Embodiment 2 shown in FIG. 5 and FIG. 6 are assigned the same reference numerals and explanations thereof are omitted.

Embodiment 3 is characterized in that FEC pre-decoding soft decision section 511 that directly carries out a soft decision from the result of RAKE reception is provided instead of FEC pre-decoding hard decision section 411 in Embodiment 2. Therefore, in this case, the signal subjected to soft decision (soft decision value) prior to FEC decoding obtained as a result of the soft decision by FEC pre-decoding soft decision section 511 is outputted to switch sections 423 and 423a, and outputted to replica generating section 403 according to the above selection conditions.

Thus, the interference canceller apparatus of this embodiment carries out error detection (CRC) on the signal obtained by carrying out a hard decision on the signal after FEC decoding in stages except the final stage and outputs the CRC result and hard decision value (FEC-coded hard decision signal) in the own stage to the next stage, and when the CRC result from the previous stage is OK (no error), generates a replica using the errorless hard decision value of the previous stage, and can thereby generate replicas with high precision reliably. In this case, since a series of processes such as FEC decoding, hard decision, and FEC coding become unnecessary in the own stage, it is possible to reduce the amount of calculations.

Furthermore, when the CRC result from the previous stage is NG (an error is detected) and the CRC result in the own stage is OK, this embodiment generates replicas using the errorless hard decision values of the own stage, and can thereby generate replicas with high precision reliably.

Furthermore, when the CRC result from the previous stage is NG and the CRC result in the own stage is also NG, this embodiment does not use the erroneous signal, but generates replicas using the signal obtained by carrying out a soft decision on the signal prior to FEC decoding in the own stage, thus preventing replicas from being generated using erroneous signals and improving precision of replicas.

Thus, such processing makes it possible to generate appropriate replicas and reduce interference between users.

However, the foregoing embodiments have described the case where the transmission data decision section in each stage (except the final stage) carries out FEC coding, but the present invention is not limited to this description. In the case where no FEC coding is performed and when a replica is generated, it is possible to use weighting factors according to the error detection result and use a hard decision signal prior to FEC decoding or soft decision signal.

Furthermore, provision of the interference canceller apparatus according to the foregoing embodiments in a base station apparatus makes it possible to carry out effective interference elimination on the received signal, improve the performance of the base station apparatus and provide the user with comfortable effects such as good speech quality.

Moreover, provision of the interference canceller apparatus according to the foregoing embodiments in a mobile station apparatus makes it possible to carry out effective interference elimination on the received signal, improve the performance of the mobile station apparatus and provide the user with comfortable effects such as good speech quality.

This application is based on the Japanese Patent Application No. 2000-138715 filed on May 11, 2000, entire content of which is expressly incorporated by reference herein.

### Industrial Applicability

The present invention is applicable to a radio apparatus mounted on a mobile station apparatus and base station apparatus, etc. in a mobile unit communication system.

## Claims

1. An interference canceller apparatus that eliminates interference from a user by generating an interference replica of said user and subtracting said interference replica from a received signal, said interference canceller apparatus comprising:
a first decider that performs a hard decision on a received signal after an error correcting decoding;
a second decider that performs one of a hard decision and a soft decision on a received signal before an error correcting decoding;
an error detector that performs an error detection on the signal after the decision in the first decider;
a selector that, based on an error detection result, selects one of:
- a first signal obtained after the error correcting coding of the signal after the decision in the first decider; and
- a second signal after the decision in the second decider; and
a generator that generates the replica using a selected signal.

2. The interference canceller apparatus of claim 1, wherein the selector selects the second signal when the error detection result shows an error in the signal after the decision in the first decider.

3. The interference canceller apparatus of claim 1, wherein the selector selects the first signal when the error detection result shows no error in the signal after the decision in the first decider.

4. An interference canceller apparatus comprising a plurality of stages that generate an interference replica of a user and subtract said interference replica from a received signal, at least one of said plurality of stages excluding a final stage comprising an interference canceller unit having the interference canceller apparatus of claim 1,
wherein, based on an error detection result in a current stage of a selector and an error detection result in a previous stage of said current stage, said selector selects one of:
- a third signal obtained after the error correcting coding of the signal after the decision in the first decider in the current stage;
- a fourth signal obtained after the error correcting coding of the signal after the decision of the first decider in the previous stage; and
- a fifth signal after the decision in the second decider in the current stage.

5. The interference canceller apparatus of claim 4, wherein the selector selects the fourth signal when the error detection result in the previous stage shows no error in the signal after the decision in the first decider in the previous stage.

6. The interference canceller apparatus of claim 4, wherein the selector selects the third signal when the error detection result in the previous stage shows an error in the signal after the decision in the first decider in the previous stage and the error detection result in the current stage shows no error in the signal after the decision in the first decider in the current stage.

7. The interference canceller apparatus of claim 4, wherein the selector selects the fifth signal when the error detection result in the previous stage shows an error in the signal after the decision in the first decider in the previous stage and the error detection result in the current stage shows an error in the signal after the decision in the first decider in the current stage.

8. The interference canceller apparatus of claim 4 having a final stage comprising a second interference canceller unit, said second interference canceller unit comprising:
a hard decider that performs a hard decision on a received signal after an error correcting decoding;
a second selector that selects one of:
- a sixth signal after a hard decision in a current stage of said second selector; and
- a seventh signal after a hard decision in a previous stage of said current stage; and
an outputter that outputs a selected signal.

9. The interference canceller apparatus of claim 8, wherein the second selector selects the seventh signal when an error detection result in the previous stage shows no error in the signal after the decision in the first decider in the previous stage.

10. The interference canceller of claim 8, wherein the second selector selects the sixth signal when an error detection result in the previous stage shows an error in the signal after the decision in the first decider in the previous stage.

11. An interference elimination method for eliminating interference from a user by generating an interference replica of said user and subtracting said interference replica from a received signal, said interference elimination method comprising:
a first decision step of performing a hard decision on a received signal after an error correcting decoding;
a second decision step of performing one of a hard decision and a soft decision on a received signal before an error correcting decoding;
a error detecting step of performing an error detection on the signal after the decision in the first decision step; and
a selecting step of selecting, based on an error detection result, one of:
- an eighth signal obtained after the error correcting decoding of the signal after the decision in the first decision step; and
- a ninth signal obtained after the error correcting decoding of the signal after the decision in the second decision step; and
a generating step of generating the replica using a selected signal.
